# FASCICULE DE BREVET EUROPEEN

(11) **EP 1 444 645 B1**
(45) Date de publication et mention de la délivrance du brevet: **21.06.2006**
(21) Numéro de dépôt: 02795343.9
(22) Date de dépôt: 25.10.2002
(51) Int. Cl.: G06F 3/033, G05G 9/047

(54) **STYLET POUR ORDINATEUR ET ORDINATEUR DESTINE A ETRE UTILISE AVEC UN TEL STYLET**
COMPUTER-LICHT-PEN UND DAMIT ZU VERWENDENDER COMPUTER
COMPUTER LIGHT PEN AND COMPUTER TO BE USED WITH SAME

(30) Priorité: 13.11.2001 FR 0114750
(43) Date de publication de la demande: 11.08.2004
(73) Titulaire: FRANCE TELECOM, 75015 Paris (FR)
(72) Inventeur: DEFUANS, Christine, F-38240 Meylan (FR); BERGE, Jean-Michel, F-38330 Saint Nazaire les Eymes (FR); GRATTARD, Gilles, F-38610 Gières (FR)
(86) Numéro de dépôt international: PCT/FR2002/003671
(87) Numéro de publication internationale: WO 2003/042910

(56) Documents cités:
- GB-A- 2 359 872
- US-A- 5 615 083
- US-B1- 6 271 828

## Description

La présente invention concerne un stylet pour ordinateur.

Plus particulièrement, l'invention concerne un stylet pour ordinateur, ledit ordinateur comprenant un boîtier qui comporte au moins un moyen de commande apte à être manoeuvré par un utilisateur pour engendrer des déplacements d'un objet mobile sur l'écran dans au moins une direction, ledit moyen de commande comprenant au moins une partie fixe et une partie mobile solidaires du boîtier et coopérant entre elles, ladite partie fixe étant reliée électriquement au boîtier et ladite partie mobile comportant des moyens transducteurs de déplacement qui, sous l'effet d'un déplacement de la partie mobile, sont destinés à transmettre à la partie fixe une information relative à un déplacement dudit objet mobile, sous forme de signaux électriques.

Un stylet du type en question est notamment destiné à être utilisé avec un ordinateur de poche tel que par exemple un PDA (« Personal Digital Assistant »). Un tel stylet présente une extrémité apte à se déplacer sur l'écran tactile du PDA en vue généralement d'effectuer la saisie d'un texte à l'écran ou encore de naviguer de façon interactive dans un menu affiché à l'écran.

L'ordinateur de poche peut être muni d'un moyen de commande des déplacements d'un objet mobile (personnage, animal, etc...) sur l'écran, le plus souvent dans au moins quatre directions (droite, gauche, haut, bas), ledit moyen de commande se présentant généralement sous la forme d'une croix à quatre branches. Un tel moyen de commande est utilisé notamment lorsque l'ordinateur de poche comporte des logiciels de jeux informatiques. Le déplacement de l'objet mobile dans chacune des directions est obtenu par pression sur une des branches de la croix à l'aide de l'index ou d'un autre doigt. La pression exercée provoque l'enfoncement de la branche montée sur ressort et la fermeture d'un contact, ce qui provoque le déplacement sur l'écran de l'objet mobile dans la direction souhaitée.

Dans certains types d'ordinateurs de poche, le moyen de commande ci-dessus peut être le stylet lui-même que l'utilisateur fait glisser sur l'écran dans différentes directions pour commander les déplacements d'un objet mobile sur l'écran.

Une telle utilisation du stylet s'avère toutefois peu ergonomique, dans le sens où l'utilisateur doit à la fois imposer les directions qu'il souhaite donner à l'objet mobile sur l'écran et maintenir le stylet en contact avec l'écran. Compte tenu du fait que les ordinateurs de poche présentent de petites dimensions, ces derniers n'offrent que très peu d'appui pour la main qui tient le stylet, ce qui rend particulièrement inconfortable la position de cette dernière par rapport à l'ordinateur de poche, notamment lorsque l'utilisateur est en situation de mobilité (par exemple lorsqu'il utilise son ordinateur de poche dans une voiture en déplacement).

Document US 6271828 décrit un stylet qui peut être utilisé pour l'opération d'un dispositif de contrôle de curseur en le plaçant librement dans une ouverture prévue et en l'opérant à partir de cette souple position ou alternativement le stylet peut être accouplée en permanence au dispositif de contrôle, devenant un levier.

La présente invention a notamment pour but de remédier aux inconvénients précités en proposant un stylet comprenant une extrémité qui comporte un moyen de fixation propre à coopérer avec un moyen de fixation complémentaire solidaire de ladite partie mobile, le stylet étant ainsi rendu solidaire dudit moyen de commande de déplacement de façon à former une manette apte à être manoeuvrée par l'utilisateur.

Une telle disposition permet ainsi de garantir une interactivité permanente puisque l'utilisateur n'a plus à fournir d'effort pour maintenir le stylet en contact avec l'écran. En outre, la position de la main de l'utilisateur par rapport au boîtier de l'ordinateur est rendue beaucoup plus confortable.

Dans des modes de réalisation préférés du stylet selon l'invention, on a recours à l'une et/ou à l'autre des dispositions suivantes :
- le moyen de fixation est un ergot solidaire de l'extrémité du stylet,
- le moyen de fixation est une encoche formée dans ladite extrémité.

L'invention concerne également un ordinateur destiné à être utilisé avec un stylet du type ci-dessus.

Dans des modes de réalisation préférés de l'ordinateur selon l'invention, on a recours à l'une et/ou à l'autre des dispositions suivantes :
- le moyen de fixation complémentaire est une encoche débouchant dans une cavité pratiquée dans la partie mobile et destinée à recevoir l'extrémité du stylet ;
- le moyen de fixation complémentaire est un organe de blocage/déblocage du stylet dans une cavité qui est pratiquée dans la partie mobile et qui est destinée à recevoir l'extrémité du stylet, ledit organe étant disposé dans un logement qui est défini d'une part par une ouverture pratiquée dans la partie mobile de façon à déboucher dans ladite cavité, et, d'autre part, par une cavité pratiquée dans le boîtier, ladite cavité ayant une première partie qui débouche dans l'ouverture et une seconde partie qui débouche à l'extérieur du boîtier ;
- le moyen de commande est une croix multidirectionnelle ;
- le moyen de commande est un élément d'ancrage.

D'autres caractéristiques et avantages de l'invention apparaîtront au cours de la description suivante en regard des dessins annexés sur lesquels :
- la figure 1A est une vue de face du stylet selon un premier mode de réalisation, dans laquelle l'extrémité du stylet est représentée en vue de coupe agrandie prise le long de la ligne IA-IA,
- la figure 1B est une vue en coupe du moyen de commande de la figure 4 qui est destiné à coopérer avec le stylet de la figure 1A, ladite coupe étant prise le long de la ligne IV-IV sur la figure 4A,
- la figure 1C est une vue de dessus du moyen de commande de la figure 1B,
- la figure 1D est une vue en coupe d'une variante du moyen de commande selon le premier mode de réalisation, prise le long de la ligne IV'-IV' de la figure 4B,
- la figure 1E est une vue de dessus de la variante du moyen de commande de la figure 1D,
- la figure 2A est une vue de face du stylet selon un second mode de réalisation, dans laquelle l'extrémité du stylet est représentée en vue de coupe agrandie prise le long de la ligne IIA-IIA,
- la figure 2B est une vue en coupe du moyen de commande de la figure 4 qui est destiné à coopérer avec le stylet de la figure 2A, ladite coupe étant prise le long de la ligne IV-IV sur la figure 4A,
- la figure 2C est une vue de dessus du moyen de commande de la figure 2B,
- la figure 2D est une vue en coupe d'une variante du moyen de commande selon le second mode de réalisation, prise le long de la ligne IV'-IV' de la figure 4B,
- la figure 2E est une vue de dessus de la variante du moyen de commande de la figure 2D,
- la figure 3A est une vue de face du stylet selon un troisième mode de réalisation, dans laquelle l'extrémité du stylet est représentée en vue de coupe agrandie prise le long de la ligne IIIA-IIIA,
- la figure 3B est une vue en coupe du moyen de commande de la figure 4 qui est destiné à coopérer avec le stylet de la figure 3A, ladite coupe étant prise le long de la ligne IV-IV sur la figure 4A,
- la figure 3C est une vue de dessus du moyen de commande de la figure 3B,
- la figure 3D est une vue en coupe d'une variante du moyen de commande selon le troisième mode de réalisation, prise le long de la ligne IV'-IV' de la figure 4B,
- la figure 3E est une vue de dessus de la variante du moyen de commande de la figure 3D,
- la figure 4A est une vue de face d'un ordinateur comportant un écran sur lequel est destiné à de déplacer le stylet tel que représenté sur les figures 1A, 2A et 3A,
- la figure 4B est une variante de l'ordinateur représenté sur la figure 4A.

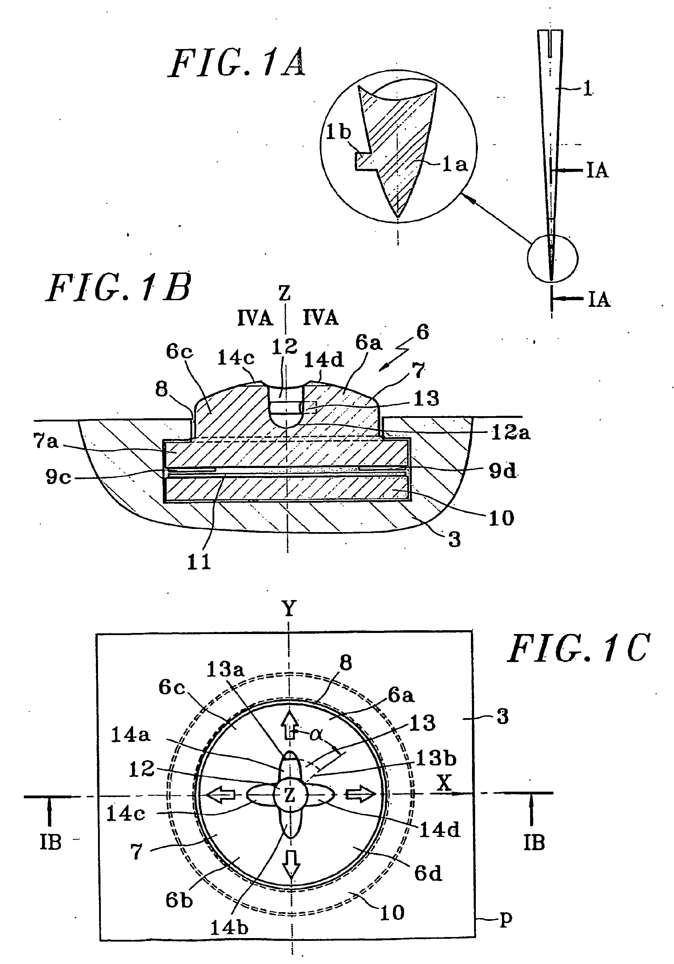

On va maintenant décrire, en référence aux figures 1A, 1B, 1C et 4A, un premier mode de réalisation du stylet selon l'invention et le moyen de commande de déplacement associé.

Comme on peut le voir sur la figure 1A, le stylet, qui est désigné par la référence numérique 1, comporte une extrémité 1a dont une vue en coupe a été agrandie, ladite vue étant entourée par un cercle sur la figure 1A. L'extrémité 1a est effilée pour pouvoir, de façon connue en tant que telle, effectuer, de la manière la plus précise possible, la saisie d'un texte à l'écran ou encore de naviguer de façon interactive dans un menu affiché à l'écran. Dans l'exemple représenté, l'extrémité 1a est pleine. Elle est en outre pourvue d'un ergot 1b venu de matière avec l'extrémité 1a. Dans l'exemple représenté, l'ergot 1b présente une forme sensiblement rectangulaire.

On va maintenant décrire, en référence à la figure 4A, un ordinateur 2, lequel comprend un boîtier 3 comportant un écran 4 sur lequel est destinée à se déplacer l'extrémité 1a du stylet 1.

Dans l'exemple représenté, l'ordinateur 2 est un PDA avec un écran 4 du type tactile.

A titre d'alternatives possibles, l'ordinateur 2 peut être un ordinateur comportant un écran non tactile, tel que notamment un ordinateur portable, une console de jeux, etc...

Le boîtier 3 comporte en outre des touches de fonction standard, par exemple trois touches 5a, 5b, 5c. La touche 5a est par exemple une touche marche/arrêt, la touche 5b une touche « adresses » et la touche 5c une touche « bloc notes ».

Le boîtier 3 comporte également une croix 6 à quatre branches 6a, 6b, 6c, 6d, ladite croix permettant, de façon connue en tant que telle, de commander le déplacement dans au moins quatre directions (haut, bas, gauche, droit) d'un objet (non représenté) mobile sur l'écran 4.

Plus précisément en référence aux figures 1B et 1C, la croix 6 comporte une partie mobile 7 qui est logée avec un faible jeu à l'intérieur d'une cavité 8 du boîtier 3 de telle sorte que lesdites branches 6a à 6d de la croix 6 dépassent du boîtier 3 pour pouvoir être pressées par l'utilisateur. Ladite partie mobile 7 est conformée de manière à ce qu'une fois montée dans le boîtier 3, elle présente une symétrie de révolution par rapport à un axe vertical Z. Ladite partie mobile 7 comporte en outre une base 7a sous laquelle sont fixés plusieurs transducteurs de déplacement, par exemple quatre transducteurs 9a, 9b, 9c, 9d, seuls les transducteurs 9c et 9d étant visibles sur la figure 1B.

Comme on peut le voir sur la figure 1B, la croix 6 comporte une partie fixe 10 qui est logée dans la cavité 8 du boîtier 3 immédiatement en dessous de la base 7a de la partie mobile 7 de la croix 6. Ladite partie fixe comporte, sur sa face orientée en direction des transducteurs de déplacement 9a à 9d, un circuit électronique 11. Ainsi, de façon connue en tant que telle, lorsque l'utilisateur exerce une pression sur l'une des branches 6a à 6d de la croix 6, par exemple sur la branche 6c, la partie mobile 7 est inclinée vers le bas dans le sens inverse des aiguilles d'une montre, le transducteur 9c interprétant alors ce déplacement sous la forme de signaux électriques qu'il transmet aussitôt au circuit électronique 11.

En référence aux figures 1B et 1C, la partie mobile 7 de la croix 6 est pourvue, dans sa partie centrale, d'une cavité 12 destinée à recevoir l'extrémité 1a du stylet 1. Dans l'exemple représenté, la cavité 12 présente une forme cylindrique de révolution autour de l'axe Z et comporte un fond 12a sensiblement arrondi.

Une encoche 13, destinée à recevoir l'ergot 1b de l'extrémité 1a du stylet 1, est pratiquée dans la partie mobile 7 de la croix 6 de façon à déboucher dans la partie inférieure de la cavité 12. Comme on peut le voir sur la figure 1C, ladite encoche s'étend angulairement dans un plan P perpendiculaire à l'axe Z, entre un axe horizontal X contenu dans le plan P et un axe horizontal Y contenu dans le plan P et perpendiculaire à l'axe Y, selon un angle d'environ 45°.

L'ancrage du stylet 1 par rapport à la croix 6 est effectué en enfonçant l'extrémité 1a du stylet 1 dans la cavité 12 jusqu'à ce que l'extrémité 1a du stylet 1 vienne en butée contre le fond 12a de la cavité 12. Il est fait en sorte que lors de l'enfoncement, l'extrémité 1 a soit orientée dans la cavité 12 de façon à ce que l'ergot vienne se loger dans l'encoche 13, contre une première extrémité 13a de cette dernière.

Le stylet 1 est alors entraîné en rotation par rapport à l'axe Z dans le sens des aiguilles d'une montre de façon à ce que l'ergot 1b se déplace angulairement dans l'encoche 13 jusqu'à parvenir en butée contre une seconde extrémité 13b de cette dernière. Le stylet 1 est ainsi bloqué par rapport à la partie mobile 7 de la croix 6. En conséquence, il est susceptible d'être manoeuvré à la manière d'un joystick. A cet effet, l'extrémité de la cavité 12 qui débouche vers l'extérieur est pourvue de quatre échancrures 14a, 14b, 14c et 14d aptes à former des butées contre lesquelles est destiné à venir s'appuyer le stylet 1 lorsque ce dernier est respectivement déplacé vers le haut, le bas, à droite et à gauche.

Pour libérer le stylet 1 de la croix 6, il suffit de procéder à une manoeuvre inverse à celle de l'ancrage. C'est à dire que le stylet 1 est entraîné en rotation dans le sens inverse des aiguilles d'une montre de façon à ce que l'ergot 1b se déplace angulairement dans l'encoche 13 jusqu'à parvenir en butée contre la première extrémité 13a de l'encoche 13. Le stylet 1 peut alors être retiré.

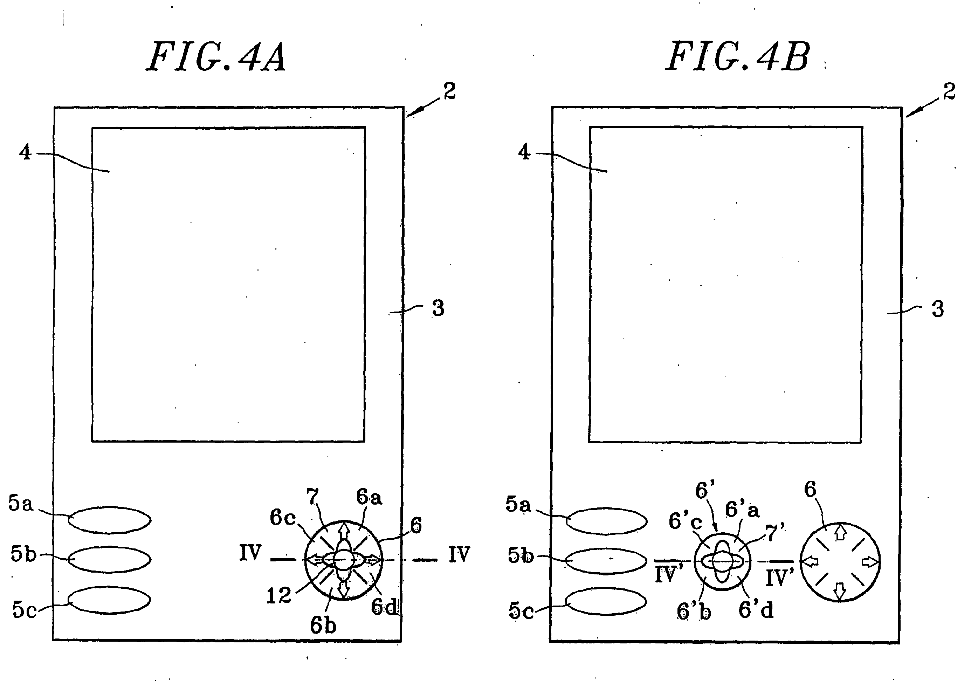

Selon une variante de l'ordinateur représentée sur la figure 4B, l'ancrage du stylet 1 n'est pas effectué sur la croix multidirectionnelle 6 mais sur un élément d'ancrage 6' disposé dans le boîtier 3. Dans ce cas, la croix multidirectionnelle 6 est alors d'un type tout à fait classique, c'est à dire qu'elle est dépourvue de cavité 12.

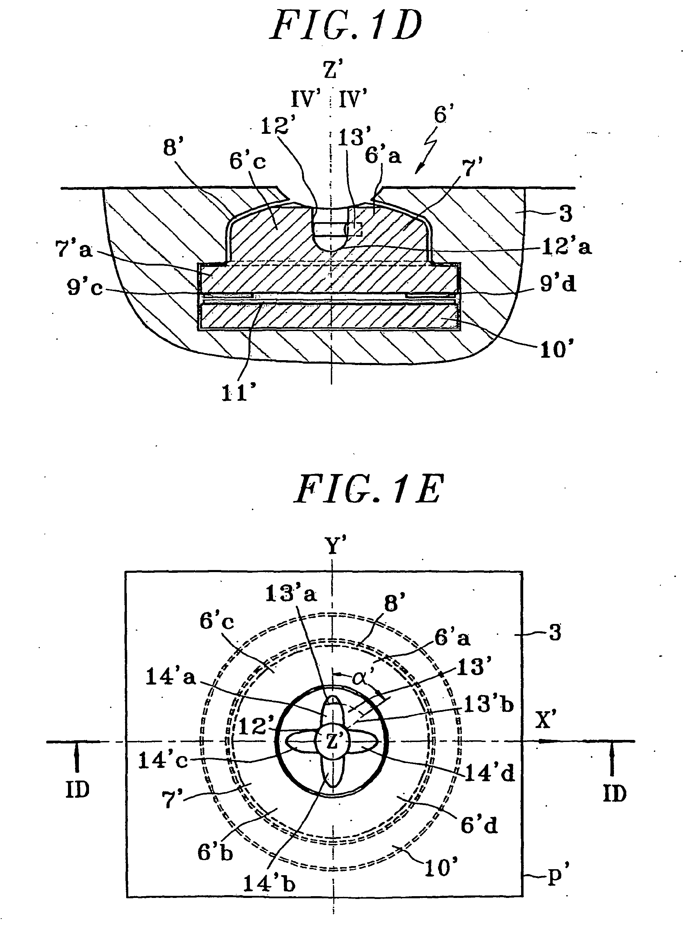

Plus précisément en référence aux figures 1D et 1E, l'élément 6' comporte, d'une façon analogue à la croix 6, une partie mobile 7', laquelle est logée complètement, avec un faible jeu, à l'intérieur d'une cavité 8' du boîtier 3. Ladite partie mobile 7' est conformée de manière à ce qu'une fois montée dans le boîtier 3, elle présente une symétrie de révolution par rapport à un axe vertical Z'. Ladite partie mobile 7' comporte en outre une base 7'a sous laquelle sont fixés quatre transducteurs de déplacement 9'a, 9'b, 9'c, 9'd, seuls les transducteurs 9'c et 9'd étant visibles sur la figure 1D.

Comme on peut le voir sur la figure 1D, l'élément d'ancrage 6' comporte une partie fixe 10' qui est logée dans la cavité 8' du boîtier 3 immédiatement en dessous de la base 7'a de la partie mobile 7' de l'élément d'ancrage 6'. Ladite partie fixe comporte, sur sa face orientée en direction des transducteurs de déplacement 9'a à 9'd, un circuit électronique 11'. De façon analogue à la croix 6, la partie mobile 7' est apte à se déplacer par rapport à la partie fixe 10' de telle sorte que lorsqu'une pression est exercée sur une des zones de l'élément d'ancrage 6' située au dessus d'un transducteur de déplacement, par exemple sur la zone 6'c, la partie mobile 7' est inclinée vers le bas dans le sens inverse des aiguilles d'une montre, le transducteur 9'c interprétant alors ce déplacement sous la forme de signaux électriques qu'il transmet aussitôt au circuit électronique 11'.

En référence aux figures 1D et 1E, la partie mobile 7' de l'élément 6' est pourvue, dans sa partie centrale, d'une cavité 12' destinée à recevoir l'extrémité 1a du stylet 1. Dans l'exemple représenté, la cavité 12' présente une forme cylindrique de révolution autour de l'axe Z' et comporte un fond 12'a sensiblement arrondi.

Une encoche 13', destinée à recevoir l'ergot 1b de l'extrémité 1a du stylet 1, est pratiquée dans la partie mobile 7' de l'élément d'ancrage 6' de façon à déboucher dans la partie inférieure de la cavité 12'. Comme on peut le voir sur la figure 1E, ladite encoche s'étend angulairement dans un plan P' perpendiculaire à l'axe Z', entre un axe horizontal X' contenu dans le plan P' et un axe horizontal Y' contenu dans le plan P' et perpendiculaire à l'axe Y', selon un angle d'environ 45°.

L'ancrage et la libération du stylet sont effectués de la même façon que dans le premier mode de réalisation représenté sur les figures 1B et 1C.

Une fois le stylet 1 ancré par rapport à l'élément 6', il est susceptible d'être manoeuvré à la manière d'un joystick. A cet effet, l'extrémité de la cavité 12' qui débouche vers l'extérieur est pourvue de quatre échancrures 14'a, 14'b, 14'c et 14'd aptes à former des butées contre lesquelles est destiné à venir s'appuyer le stylet 1 lorsque ce dernier est respectivement déplacé vers le haut, le bas, à droite et à gauche.

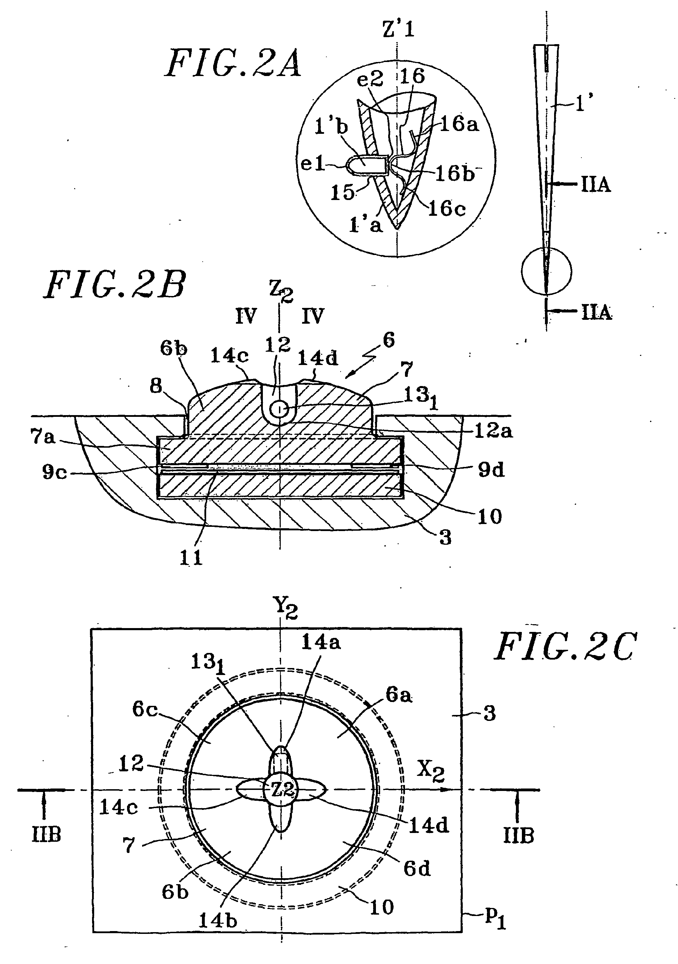

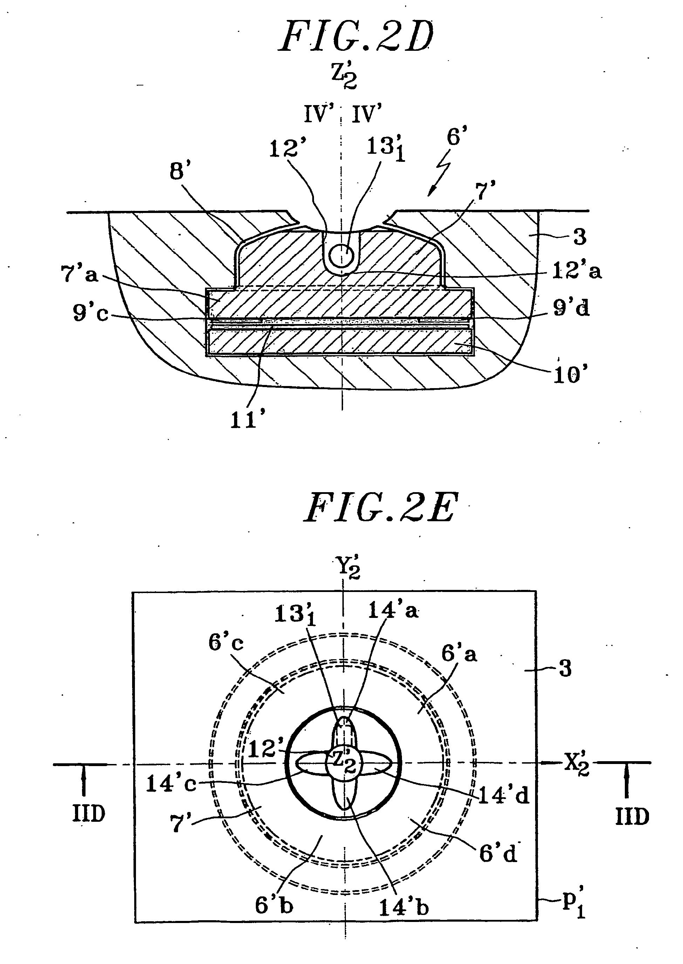

On va maintenant décrire, en référence aux figures 2A, 2B, 2C et 4A, un deuxième mode de réalisation du stylet selon l'invention et le moyen de commande de déplacement associé.

Comme on peut le voir sur la figure 2A, le stylet, qui est désigné par la référence numérique 1', comporte une extrémité 1'a dont une vue en coupe a été agrandie, ladite vue étant entourée par un cercle sur la figure 2A. L'extrémité 1'a est effilée pour pouvoir, de façon connue en tant que telle, effectuer, de la manière la plus précise possible, la saisie d'un texte à l'écran ou encore de naviguer de façon interactive dans un menu affiché à l'écran.

Une telle extrémité 1'a est creuse et conformée de façon à présenter une symétrie de révolution autour d'un axe, par exemple l'axe vertical Z'1. L'extrémité 1'a comporte une paroi 1'c pourvue d'un trou traversant 15 à l'intérieur duquel est introduit un organe tubulaire 1'b présentant une première extrémité e1 de forme arrondie et une seconde extrémité e2 de forme rectiligne, ledit organe 1'b étant positionné dans le trou 15 de façon à s'étendre perpendiculairement à l'axe Z'1, la première extrémité étant orientée vers l'extérieur de la paroi 15, tandis que la seconde extrémité e2 est orientée vers l'intérieur de ladite paroi.

Comme on peut le voir également sur la figure 2A, l'organe 1'b est sollicité élastiquement par l'intermédiaire par exemple d'une languette élastique 16 qui comporte des première et seconde extrémités libres 16a et 16b en appui sur la face interne de la paroi 15, lesdites extrémités étant susceptibles de glisser dans des directions opposées sous l'effet d'une déformation de la languette 16. Comme cela sera décrit de façon plus détaillée dans la suite de la description, l'organe 1'b est ainsi destiné à former un ergot rétractable.

En position repos qui est la position représentée sur la figure 2A, la languette 16 est déformée élastiquement de telle sorte qu'une partie intermédiaire 16c de la languette 16 vienne en appui contre l'extrémité e2 de l'organe 1'b, l'extrémité e1 de ce dernier faisant alors saillie à l'extérieur de l'extrémité 1'a du stylet 1'.

En référence aux figures 2B et 2C, la partie mobile 7 de la croix 6 est similaire à celle représentée sur les figures 1B et 1C, si ce n'est qu'à la place d'une encoche 13, une encoche 13₁, de forme sensiblement correspondante à celle de l'ergot 1'b de l'extrémité 1'a du stylet 1', ladite encoche étant également pratiquée dans la partie mobile 7 de la croix 6 de façon à déboucher dans la partie inférieure de la cavité 12. Comme on peut le voir sur la figure 2C, l'encoche 13₁ s'étend selon un axe Y2 contenu dans un plan P₁ du boîtier 3 et perpendiculaire à un axe Z2 le long duquel s'étend la cavité 12 de la partie mobile 7.

L'ancrage du stylet 1' par rapport à là croix 6 est effectué en enfonçant l'extrémité 1'a du stylet 1' dans la cavité 12, l'extrémité 1'a étant orientée dans la cavité 12 de façon à ce que l'ergot 1'b soit positionné au droit de l'encoche 13₁. Au cours de cet enfoncement, l'ergot 1'b est repoussé par la paroi de la cavité 12 à l'intérieur de l'extrémité 1'a du stylet 1', ce qui a pour effet d'aplatir la languette 16. Lorsque l'extrémité e1 de l'ergot 1'b parvient devant l'encoche 13₁, la languette 16 reprend sa position de repos, l'ergot 1'b étant alors repoussé à l'intérieur de l'encoche 13₁ sous l'effet de la déformation élastique de la languette 16. Le stylet 1' est ainsi bloqué par rapport à la partie mobile 7 de la croix 6. En conséquence, il est susceptible d'être manoeuvré à la manière d'un joystick. A cet effet, de la même façon que dans l'exemple représenté sur les figures 1B et 1C, l'extrémité de la cavité 12 qui débouche vers l'extérieur est pourvue de quatre échancrures 14a, 14b, 14c et 14d.

Pour libérer le stylet 1' de la croix 6, il suffit de tirer fermement ce dernier vers le haut, ce qui a pour effet de dégager l'ergot 1'b de l'encoche 13₁. Le stylet 1' peut alors être retiré.

A titre d'alternative, un bouton poussoir pourrait être relié élastiquement à l'extrémité e1 de l'ergot 1'b de façon à ce que l'emprisonnement de l'ergot 1'b dans l'encoche 13₁ fasse passer le bouton poussoir en position haute, le dégagement de l'ergot 1'b de l'encoche 13₁ étant alors effectué par simple appui sur le bouton-poussoir. Un tel bouton pourrait être par exemple disposé sur le boîtier 3, ou encore sur le stylet 1' à la manière d'un bouton-poussoir de stylo à pointe rétractable.

Selon une variante de l'ordinateur représentée sur la figure 4B, l'ancrage du stylet 1' n'est pas effectué sur la croix multidirectionnelle 6 mais sur l'élément d'ancrage 6'.

Plus précisément en référence aux figures 2D et 2E, l'élément 6' se distingue de celui représenté sur les figures 1D et 1E par le fait qu'à la place de l'encoche 13', il est prévu une encoche 13'₁ identique en tout point à l'encoche 13₁ de la partie mobile de la croix 6. Comme on peut le voir sur la figure 2C, l'encoche 13'₁ s'étend selon un axe Y'2 contenu dans un plan P'₁ du boîtier 3 et perpendiculaire à un axe Z'2 le long duquel s'étend la cavité 12'.

L'ancrage et la libération du stylet 1' sont effectués de la même façon que dans le second mode de réalisation représenté sur les figures 2B et 2C.

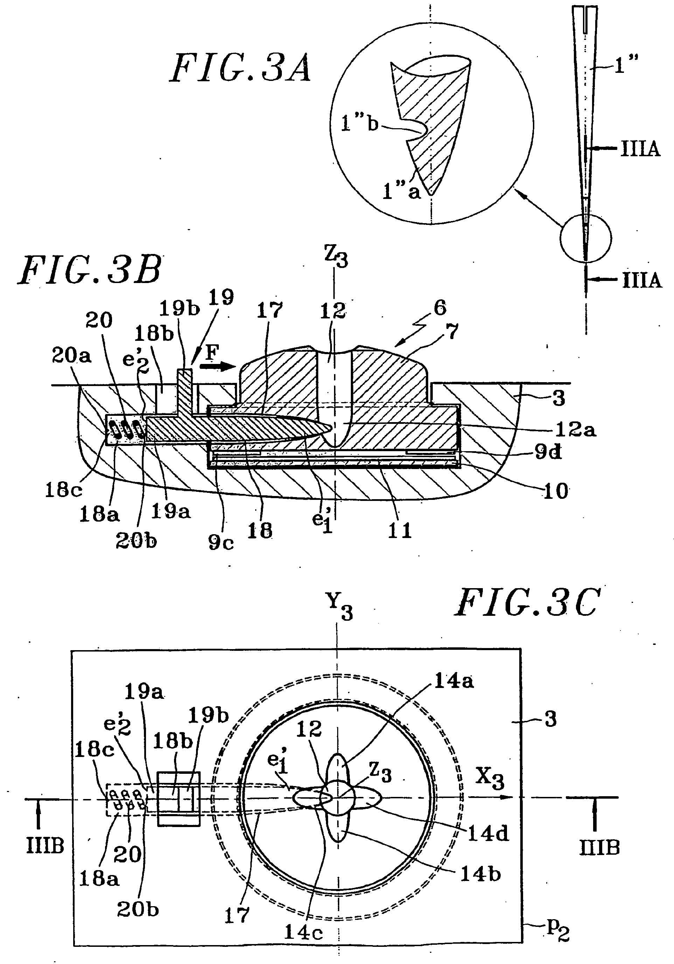

On va maintenant décrire, en référence aux figures 3A, 3B, 3C et 4A, un troisième mode de réalisation du stylet selon l'invention et le moyen de commande de déplacement associé.

Comme on peut le voir sur la figure 3A, le stylet, qui est désigné par la référence numérique 1", comporte une extrémité 1"a dont une vue en coupe a été agrandie, ladite vue étant entourée par un cercle sur la figure 3A. L'extrémité 1"a est effilée pour pouvoir, de façon connue en tant que telle, effectuer, de la manière la plus précise possible, la saisie d'un texte à l'écran ou encore de naviguer de façon interactive dans un menu affiché à l'écran. Dans l'exemple représenté, l'extrémité 1"a est pleine et est pourvue d'une encoche 1"b de forme sensiblement arrondie.

En référence aux figures 3B et 3C, la partie mobile 7 de la croix 6 est pourvue, dans sa partie centrale, d'une cavité 12 destinée à recevoir l'extrémité 1"a du stylet 1". Dans l'exemple représenté, la cavité 12 présente une forme cylindrique de révolution autour d'un axe Z3 et comporte un fond 12a sensiblement arrondi.

Une ouverture 17 est pratiquée dans la partie inférieure de la partie mobile 7 de façon à déboucher dans la partie inférieure de la cavité 12, ladite ouverture étant destinée à venir en correspondance avec l'encoche 1"b du stylet 1", une fois l'extrémité 1"a de ce dernier enfoncée dans la cavité 12.

L'ouverture 17 débouche dans une cavité 18 pratiquée dans le boîtier 3.

L'ouverture 17 et la cavité 18 forment ensemble un logement pour un organe de blocage/déblocage 19 du stylet 1" dans la cavité 12.

Plus précisément, l'organe 19 comporte un corps principal 19a, de forme allongé, qui s'étend, selon un axe X3 contenu dans un plan P3 du boîtier 3 et perpendiculaire à l'axe Z3, dans une partie 18a de la cavité 18 et dans l'ouverture 17. Le corps 19a est surmonté d'une saillie 19b qui, dans l'exemple représenté, présente une forme allongée, ladite saillie s'étendant selon l'axe Z2, dans une partie 18b de la cavité 18, de façon à dépasser du boîtier 3. La saillie 19b forme ainsi un organe tactile apte à être manoeuvré par un utilisateur.

Le corps 19a comporte une première extrémité e'1 de forme arrondie qui est orientée en direction de la cavité 12 et une seconde extrémité opposée e'2 de forme rectiligne. L'extrémité e'2 est sollicité élastiquement au moyen, par exemple, d'un ressort à spirale 20 présentant une extrémité 20a fixée sur une paroi 18c de la cavité 18 et une extrémité 20b fixée sur l'extrémité e'2 du corps 19a, ledit ressort s'étendant selon l'axe X3, dans la partie 18a de la cavité 18. En position de repos, qui est la position représentée sur les figures 3B et 3C, l'extrémité e'1 du corps 19a est engagée dans la cavité 12.

L'ancrage du stylet 1" par rapport à la croix 6 est effectué en enfonçant l'extrémité 1"a du stylet 1" dans la cavité 12, l'extrémité 1"a étant orientée dans la cavité 12 de façon à ce que l'encoche 1"b soit positionnée au droit de l'embouchure de l'ouverture 17 dans la cavité 12. L'extrémité 1"a est enfoncée jusqu'à parvenir en butée contre le fond 12a de la cavité 12, ladite encoche 1"b étant alors, à cet instant, en correspondance exacte avec ladite embouchure.

L'utilisateur pousse alors l'organe tactile 19b dans le sens de la flèche F représentée sur la figure 3B, ce qui a pour effet de déplacer l'organe 19, l'extrémité e'1 du corps 19a pénétrant dans la cavité 12 pour venir se loger dans l'encoche 1"b. Le stylet 1" est ainsi bloqué par rapport à la partie mobile 7 de la croix 6. En conséquence, il est susceptible d'être manoeuvré à la manière d'un joystick. A cet effet, de la même façon que dans l'exemple représenté sur les figures 1B, 1C et 2B, 2C, l'extrémité de la cavité 12 qui débouche vers l'extérieur est pourvue de quatre échancrures 14a, 14b, 14c et 14d.

Pour libérer le stylet 1" de la croix 6, il suffit de repousser l'organe tactile 19b dans le sens inverse de celui de la flèche F, ce qui a pour effet de comprimer le ressort 20. L'extrémité e'1 du corps 19a est alors dégagée de la cavité 12, l'utilisateur pouvant ainsi retirer le stylet 1", tout en maintenant l'organe tactile 19b. Une fois le stylet 1" retiré complètement, l'utilisateur relâche l'organe tactile 19b qui revient à sa position de repos telle que représentée sur les figures 3B et 3C.

Selon une variante de l'ordinateur représentée sur la figure 4B, l'ancrage du stylet 1" n'est pas effectué sur la croix multidirectionnelle 6 mais sur l'élément d'ancrage 6'.

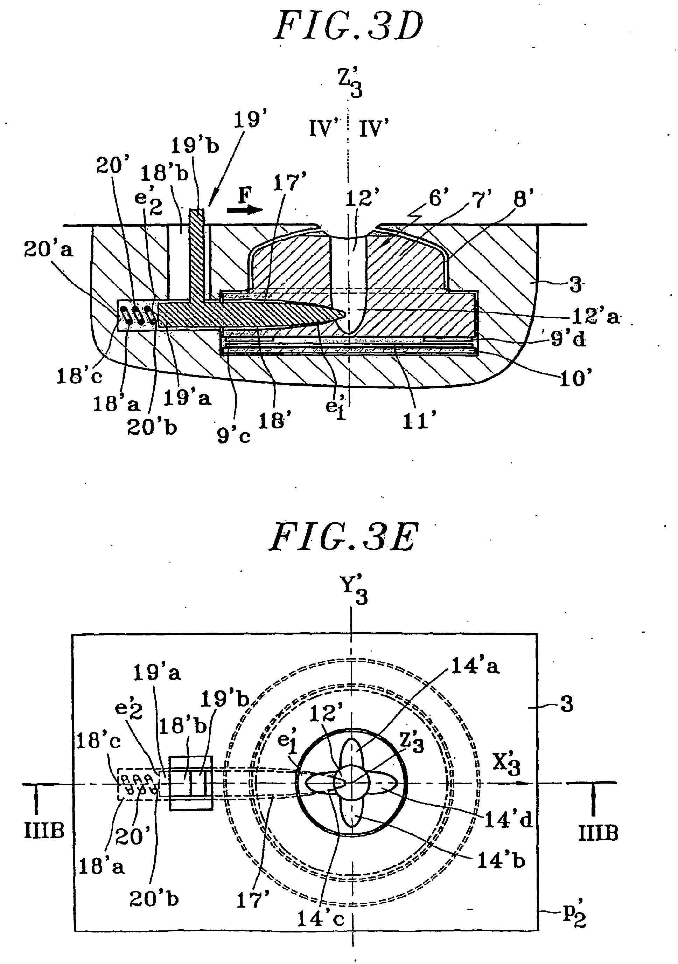

Plus précisément en référence aux figures 3D et 3E, l'élément 6' se distingue de ceux représentés sur les figures 1D, 1E et 2D, 2E par le fait qu'à la place d'une encoche, une ouverture 17' est pratiquée dans la partie inférieure de la partie mobile 7' de façon à déboucher dans la partie inférieure de la cavité 12', ladite ouverture étant destinée à venir en correspondance avec l'encoche 1"b du stylet 1", une fois l'extrémité 1"a de ce dernier enfoncée dans la cavité 12'.

L'ouverture 17' débouche dans une cavité 18' pratiquée dans le boîtier 3.

L'ouverture 17' et la cavité 18' forment ensemble un logement pour un organe de blocage/déblocage 19' du stylet 1" dans la cavité 12'.

L'ouverture 17', de même que les cavités 12' et 18' et l'organe 19' étant identiques en tout point respectivement à l'ouverture 17, aux cavités 12, 18, et à l'organe 19, il est inutile de les décrire à nouveau ici.

En conséquence, l'ancrage et la libération du stylet 1" dans la variante selon les figures 3D et 3E sont effectués de la même façon que dans le troisième mode de réalisation représenté sur les figures 3B et 3C.

## Revendications

1. Stylet (1 ;1';1") pour ordinateur (2), ledit ordinateur comprenant un boîtier (3) qui comporte un écran (4) et un moyen de commande (6 ;6') apte être manoeuvré par un utilisateur pour engendrer des déplacements d'un objet mobile sur l'écran dans au moins une direction, ledit moyen de commande comprenant au moins une partie fixe (10 ;10') et une partie mobile (7 ;7') solidaires du boîtier et coopérant entre elles, ladite partie fixe étant reliée électriquement au boîtier et ladite partie mobile comportant des moyens transducteurs de déplacement (9a, 9b, 9c, 9d ;9'a, 9'b, 9'c, 9'd) qui, sous l'effet d'un déplacement de la partie mobile, sont destinés à transmettre à la partie fixe une information relative à un déplacement dudit objet mobile, sous forme de signaux électriques,
le stylet étant **caractérisé en ce qu'**il comprend une extrémité (1a ; 1'a ;1"a) qui comporte un moyen de fixation (1b, 1'b, 1"b) propre à coopérer avec un moyen de fixation complémentaire (13 ;13' ; 13₁; 13'₁ ; 17, 18, 19 ; 17', 18', 19') solidaire de ladite partie mobile, le stylet étant ainsi rendu solidaire dudit moyen de commande de déplacement de façon à former une manette apte à être manoeuvrée par l'utilisateur.

2. Stylet selon la revendication 1, dans lequel le moyen de fixation est un ergot (1b ; 1'b) solidaire de l'extrémité du stylet.

3. Stylet selon la revendication 2, dans lequel ledit ergot est fixe.

4. Stylet selon la revendication 2, dans lequel ledit ergot est rétractable.

5. Stylet selon la revendication 1, dans lequel le moyen de fixation est une encoche (1"b) formée dans l' extrémité du stylet.

6. Ordinateur comprenant un boîtier (3) qui comporte un écran (4) et un moyen de commande (6 ;6') apte être manoeuvré par un utilisateur pour engendrer des déplacements d'un objet mobile sur l'écran dans au moins une direction, ledit moyen de commande comprenant au moins une partie fixe (10 ;10') et une partie mobile (7 ;7') solidaires du boîtier et coopérant entre elles, ladite partie fixe étant reliée électriquement au boîtier et ladite partie mobile comportant des moyens transducteurs de déplacement (9a, 9b, 9c, 9d ;9'a, 9'b, 9'c, 9'd) qui, sous l'effet d'un déplacement de la partie mobile, sont destinés à transmettre à la partie fixe une information relative à un déplacement dudit objet mobile, sous forme de signaux électriques,
ledit ordinateur étant **caractérisé en ce que** ladite partie mobile (7 ;7') comporte un moyen de fixation complémentaire d'un moyen de fixation (1b, 1'b, 1"b) qui est disposé à l'extrémité (1a ; 1'a ; 1"a) d'un stylet (1; 1'; 1") apte à se déplacer sur l'écran (4), le stylet étant ainsi rendu solidaire dudit moyen de commande de déplacement de façon à former une manette apte à être manoeuvrée par l'utilisateur.

7. Ordinateur selon la revendication 6, dans lequel le moyen de fixation complémentaire est une encoche (13 ; 13' ; 13₁ ; 13'₁) débouchant dans une cavité (12 ;12') pratiquée dans la partie mobile (7 ;7') et destinée à recevoir l'extrémité (1a; 1'a) du stylet (1 ;1').

8. Ordinateur selon la revendication 6, dans lequel le moyen de fixation complémentaire est un organe de blocage/déblocage (19 ;19') du stylet (1") dans une cavité (12 ;12') qui est pratiquée dans la partie mobile (7 ;7') et qui est destinée à recevoir l'extrémité (1"a) du stylet (1"), ledit organe étant disposé dans un logement qui est défini d'une part par une ouverture (17 ;17') pratiquée dans la partie mobile (7 ;7') de façon à déboucher dans ladite cavité (12 ; 12'), et, d'autre part, par une cavité (18 ;18') pratiquée dans le boîtier (3), ladite cavité (18 ; 18') ayant une première partie (18a ;18'a) qui débouche dans l'ouverture (17 ;17') et une seconde partie (18b ;18'b) qui débouche à l'extérieur du boîtier (3).

9. Ordinateur selon l'une quelconque des revendications 6 à 8, dans lequel le moyen de commande est une croix multidirectionnelle (6).

10. Ordinateur selon l'une quelconque des revendications 6 à 8, dans lequel le moyen de commande est un élément d'ancrage (6').

## Claims

1. A stylus (1; 1'; 1") for a computer (2) comprising a housing (3) that carries a screen (4) and control means (6; 6') adapted to be manipulated by a user to generate movements of a mobile object on the screen in at least one direction, said control means comprising a fixed part (10; 10') and a mobile part (7; 7') fastened to the housing and cooperating with each other, said fixed part being electrically connected to the housing and said mobile part comprising movement transducer means (9a, 9b, 9c, 9d, 9'a, 9'b, 9'c, 9'd) which are adapted, in response to movement of the mobile part, to transmit to the fixed part information in the form of electrical signals relating to movement of said mobile object, the stylus being **characterized in that** it has an end (1a' 1'a; 1"a) that comprises fixing means (1b, 1'b, 1"b) adapted to cooperate with complementary fixing means (13; 13'; 13₁; 17, 18, 19; 17', 18', 19') fastened to said mobile part to fasten the stylus to said movement control means to form a control that may be manipulated by the user.

2. A stylus according to claim 1, wherein the fixing means comprise a pin (1b; 1'b) attached to the end of the stylus.

3. A stylus according to claim 2, wherein said pin is fixed.

4. A stylus according to claim 2, wherein said pin is retractable.

5. A stylus according to claim 1, wherein the fixing means comprise a notch (1"b) formed in the end of the stylus.

6. A computer comprising a housing (3) that comprises a screen (4) and control means (6; 6') adapted to be manipulated by a user to generate movements of a mobile object on the screen in at least one direction, said control means comprising a fixed part (10; 10') and a mobile part (7; 7') fastened to the housing and cooperating with each other, said fixed part being electrically connected to the housing and said mobile part comprising movement transducer means (9a, 9b, 9c, 9d, 9'a, 9'b, 9'c, 9'd) which are adapted, in response to movement of the mobile part, to transmit to the fixed part information in the form of electrical signals relating to movement of said mobile object, said computer being **characterized in that** said mobile part (7; 7") comprises fixing means complementary to fixing means (1b, 1'b, 1"b) disposed at the end (1a; 1'a; 1"a) of a stylus (1; 1'; 1") adapted to be moved over the screen (4) to fasten the stylus to said movement control means to form a control that may be manipulated by the user.

7. A computer according to claim 6, wherein the complementary fixing means comprise a notch (13' 13'; 13₁; 13'₁) opening into a cavity (12; 12') in the mobile part (7; 7') and adapted to receive the end (1a; 1'a) of the stylus (1; 1').

8. A computer according to claim 6, wherein the complementary fixing means comprise a fastening member (19; 19') for fastening the stylus (1") into and releasing it from a cavity (12; 12') in the mobile part (7; 7') adapted to receive the end (1"a) of the stylus (1"), said fastening member being disposed in a housing that is defined firstly by a recess (17; 17') in the mobile part (7; 7') that opens into said cavity (12; 12') and secondly by a cavity (18; 18') in the housing (3), said cavity (18; 18') having a first portion (18a; 18'a) that opens into the recess (17; 17') and a second portion (18b; 18'b) that opens to the outside of the housing (3).

9. A computer according to any one of claims 6 to 8, wherein the control means comprise a multidirectional cross (6).

10. A computer according to any one of claims 6 to 8, wherein the control means comprise an anchor member (6').

## Patentansprüche

1. Stift (1; 1'; 1") für Computer (2); wobei der besagte Computer ein Gehäuse (3) umfaßt, das einen Bildschirm (4) und ein geeignetes Steuermittel (6; 6') enthält, das von einem Benutzer bedient werden kann, um Verschiebungen eines mobilen Objekts auf dem Bildschirm in mindestens einer Richtung zu erzeugen, wobei das besagte Steuermittel mindestens einen feststehenden Teil (10; 10') und einen beweglichen Teil (7; 7') umfaßt, die mit dem Gehäuse fest verbunden sind und untereinander zusammenarbeiten, wobei der besagte feststehende Teil elektrisch mit dem Gehäuse verbunden ist, und der besagte bewegliche Teil Mittel zur Verschiebungsumsetzung (9a, 9b, 9c, 9d; 9'a, 9'b, 9'c, 9'd) umfaßt, die dazu bestimmt sind, unter der Einwirkung einer Verschiebung des beweglichen Teils eine Information bezüglich der Verschiebung des besagten mobilen Objekts in Form von elektrischen Signalen an den feststehenden Teil zu übertragen, wobei der Stift **dadurch gekennzeichnet ist, daß** er ein Ende (1 a; 1'a; 1"a) umfaßt, das ein Befestigungsmittel (1b, 1'b, 1"b) enthält, das dazu geeignet ist, mit einem ergänzenden Befestigungsmittel (13; 13'; 13₁; 13'₁; 17, 18, 19; 17', 18', 19') zusammenzuarbeiten, das fest mit dem besagten beweglichen Teil verbunden ist, wobei der Stift somit mit dem besagten Verschiebungssteuermittel fest verbunden ist, damit ein Handgriff gebildet wird, der vom Benutzer betätigt werden kann.

2. Stift nach Anspruch 1, in dem das Befestigungsmittel ein mit dem Ende des Stifts fest verbundener Nocken (1b; 1'b) ist.

3. Stift nach Anspruch 2, in dem der besagte Nocken feststehend ist.

4. Stift nach Anspruch 2, in dem der besagte Nocken einziehbar ist.

5. Stift nach Anspruch 1, in dem das Befestigungsmittel eine im Ende des Stifts gebildete Kerbe (1"b) ist.

6. Computer mit einem Gehäuse (3), der einen Bildschirm (4) und ein geeignetes Steuermittel (6; 6') enthält, das von einem Benutzer bedient werden kann, um Verschiebungen eines mobilen Objekts auf dem Bildschirm in mindestens einer Richtung zu erzeugen, wobei das besagte Steuermittel mindestens einen feststehenden Teil (10; 10') und einen beweglichen Teil (7; 7') umfaßt, die mit dem Gehäuse fest verbunden sind und untereinander zusammenarbeiten, wobei der besagte feststehende Teil elektrisch mit dem Gehäuse verbunden ist, und der besagte bewegliche Teil Mittel zur Verschiebungsumsetzung (9a, 9b, 9c, 9d; 9'a, 9'b, 9'c, 9'd) umfaßt, die dazu bestimmt sind, unter der Einwirkung einer Verschiebung des beweglichen Teils eine Information bezüglich der Verschiebung des besagten mobilen Objekts in Form von elektrischen Signalen an den feststehenden Teil zu übertragen, wobei der besagte Computer **dadurch gekennzeichnet ist, daß** der besagte bewegliche Teil (7; 7') ein ergänzendes Befestigungsmittel eines Befestigungsmittels (1 b, 1'b, 1"b) enthält, das am Ende 1a; 1'a; 1"a) eines Stifts (1; 1'; 1") angeordnet ist, der auf dem Bildschirm (4) verschoben werden kann, wobei der Stift somit mit dem besagten Verschiebungssteuermittel fest verbunden ist, damit ein Handgriff gebildet wird, der vom Benutzer betätigt werden kann.

7. Computer nach Anspruch 6, in dem das ergänzende Befestigungsmittel eine Kerbe (13; 13'; 13₁; 13'₁) ist, die in eine Aushöhlung (12; 12') führt, die im beweglichen Teil (7; 7') angelegt wurde und dafür bestimmt ist, das Ende (1a; 1'a) des Stifts (1; 1') aufzunehmen.

8. Computer nach Anspruch 6, in dem das ergänzende Befestigungsmittel ein Blockier-/Freigabeorgan (19; 19') des Stifts (1") in einer Aushöhlung (12; 12') ist, die im beweglichen Teil (7; 7') angelegt wurde und dafür bestimmt ist, das Ende (1"a) des Stifts (1") aufzunehmen, wobei das besagte Organ in einer Aufnahme angeordnet ist, die einerseits durch eine Öffnung (17; 17") definiert ist, die im beweglichen Teil (7; 7') so angelegt wurde, daß sie in die besagte Aushöhlung (12; 12') führt, und andererseits durch eine Aushöhlung (18; 18'), die im Gehäuse (3) angelegt wurde, wobei die besagte Aushöhlung (18; 18") einen ersten Teil (18a, 18'a) umfaßt, der in die Öffnung (17; 17') führt, und einen zweiten Teil (18b, 18'b), der zum Gehäuseäußeren (3) führt.

9. Computer nach einem beliebigen der Ansprüche 6 bis 8, in dem das Steuermittel ein multidirektionales Kreuz (6) ist.

10. Computer nach einem beliebigen der Ansprüche 6 bis 8, in dem das Steuermittel ein Verankerungselement (6') ist.
